Europäisches Patentamt

European Patent Office

Office européen des brevets

(19)

(11) Veröffentlichungsnummer : **0 139 303**
**B1**

(12) **EUROPÄISCHE PATENTSCHRIFT**

(45) Veröffentlichungstag der Patentschrift :
23.03.88

(21) Anmeldenummer : 84112669.1

(22) Anmeldetag : 19.10.84

(51) Int. Cl.⁴ : **C 08 G  63/60**

(54) **Vollaromatische Polyester und deren Herstellung.**

(30) Priorität : 26.10.83 DE 3338805

(43) Veröffentlichungstag der Anmeldung :
02.05.85 Patentblatt 85/18

(45) Bekanntmachung des Hinweises auf die Patenterteilung : 23.03.88 Patentblatt 88/12

(84) Benannte Vertragsstaaten :
**BE CH DE FR GB IT LI NL**

(56) Entgegenhaltungen :
EP-A- 0 131 846
GB-A- 2 058 102
GB-A- 2 061 304
US-A- 4 184 996

(73) Patentinhaber : **BASF Aktiengesellschaft**
**Carl-Bosch-Strasse 38**
**D-6700 Ludwigshafen (DE)**

(72) Erfinder : **Portugall, Michael, Dr.**
**Raiffeisenstrasse 1d**
**D-6706 Wachenheim (DE)**

EP 0 139 303 B1

**Beschreibung**

Gegenstand der Erfindung sind vollaromatische Polyester, die unterhalb 300 °C eine flüssigkristalline, fadenbildende Schmelze bilden, und deren Herstellung.

Es wurden schon eine Reihe von vollaromatischen flüssigkristallinen Polyestern beschrieben. Aus der US-PS 4 375 530 sind Polyester bekannt, die Einheiten enthalten, die sich von 2,6-Dicarboxynaphthalin und 2,6-Dihydroxynaphthalin ableiten. Die dort beschriebenen Polyester haben eine relativ hohe Fließtemperatur und bedürfen Verarbeitungstemperaturen von über 300 °C. Dies ist bei der Weiterverarbeitung solcher Polyester unerwünscht.

Auch in der US-A 4 184 996 werden vollaromatische Polyester beschrieben, die Einheiten von 2,6-Dihydroxynaphthalin enthalten. Diese Produkte sind hinsichtlich Schlagzähigkeit und Kerbschlagzähigkeit nicht voll zufriedenstellend.

In der US-PS 4 118 372 werden auch bereits flüssigkristalline Polyester beschrieben, die als inerte Bestandteile u. a. Einheiten enthalten können, die sich von 2,7-Dihydroxy- oder 2,7-Dicarboxynaphthalin ableiten. Die dort aufgeführten Polyester sind noch verbesserungsbedürftig hinsichtlich ihrer Dauergebrauchsfähigkeit bei erhöhter Temperatur.

In beiden Patentschriften wird die Herstellung der Polyester nach im Prinzip bekannten Methoden beschrieben. Im Falle der Acidolyse, d. h. der Umsetzung von freien Säuren, wird die Verwendung von vorher acylierten (im besonderen acetylierten) Hydroxyverbindungen beschrieben. Dies ist umständlich und kostenintensiv, da die entsprechenden Phenole bzw. Hydroxyverbindungen zunächst getrennt zu den Acylverbindungen umgesetzt werden müssen, die dann isoliert und getrocknet werden müssen, ehe sie in der Polykondensation zum Einsatz kommen können.

In der DE-OS 2 517 957 werden vollaromatische Polyester beschrieben, die aus den underivatisierten monomeren Dihydroxy- bzw. Dicarboxyverbindungen unter Verwendung von Acetanhydrid hergestellt werden. Hierbei werden Reaktionszeiten von mehr als 15 Stunden unter erhöhter Temperatur beschrieben. Die erhaltenen Polymeren müssen ebenfalls bei Temperaturen oberhalb von 300 °C verarbeitet werden ; dies ist bei der Verarbeitung unerwünscht.

Es war deshalb die technische Aufgabe gestellt, vollaromatische, flüssigkristalline Polyester zur Verfügung zu stellen, die niedrige Verarbeitungstemperaturen erlauben, jedoch gute Dauergebrauchseigenschaften bei erhöhter Temperatur haben und durch ein vereinfachtes Herstellungsverfahren zugänglich sind. Diese Aufgabe wird gelöst durch vollaromatische Polyester, die unterhalb 300 °C eine flüssigkristalline, fadenbildende Schmelze bilden, im wesentlichen aufgebaut aus

a) 3 bis 15 Mol% Einheiten, die sich von Hydrochinon ableiten,
b) 3 bis 35 Mol% Einheiten, die sich von 2,7-Dihydroxynaphthalin ableiten,
c) als Summe aus a) und b) äquivalente molare Mengen an Einheiten, die sich von Terephthalsäure ableiten, und
d) 10 bis 70 Mol% Einheiten, die sich von p-Hydroxybenzoesäure ableiten (für die Vertragsstaaten BE, CH, LI).

Was Punkt d) betrifft, so gilt für die Vertragsstaaten DE, FR, GB, IT, NL wegen der kollidierenden Anmeldung EP-A-131846 die Beschränkung auf den Bereich 10-39,4 Mol%-Einheiten p-Hydroxybenzoesäure (Art. 54 (3) EPÜ).

Die neuen vollaromatischen flüssigkristallinen Polyester haben den Vorteil, daß sie keiner hohen Verarbeitungstemperaturen bedürfen und darüber hinaus auch bei erhöhter Temperatur gute Dauergebrauchseigenschaften aufweisen. Ferner zeichnen sich die neuen vollaromatischen Polyester durch hohe Steifigkeit, Festigkeit sowie Zähigkeit aus und haben eine glatte Oberfläche. Sie lassen sich zudem in einem Eintopfverfahren kostengünstig herstellen.

Die neuen vollaromatischen flüssigkristallinen Polyester sind insofern bemerkenswert, als die Theorie flüssigkristalliner Verbindungen einen molekularen Aufbau aus Gruppierungen, deren Substitutionsrichtungen in Richtung der Moleküllängsachsen zeigen, fordert, wie aus « Handbook of Liquid Crystals », Verlag Chemie Weinheim, 1980, Seiten 69-113, ersichtlich ist. Dieser Forderung entsprechen aromatische Verbindungen aus Ausgangsstoffen, die die reaktionsfähige Gruppen in p-Stellung haben. Einheiten, die sich von 2,7-Dihydroxynaphthalin ableiten, erscheinen somit als ungeeignet.

Auch in der US-PS 4 118 372 wird dargelegt, daß in flüssigkristallinen Polyestern Einheiten, die sich von 2,7-disubstituierten Naphthalinausgangsprodukten ableiten, möglicherweise störend wirken. Dies wird dadurch bestätigt, daß 2,7-Dihydroxynaphthalin, 4,4'-Dihydroxydiphenylsulfon oder Bisphenol A keinen mesogenen Charakter besitzen, der zur Bildung von flüssigkristallinen Polyestern erforderlich ist, wie aus « Handbook of Liquid Crystals », Verlag Chemie Weinheim, 1980, Seiten 69-113, zu entnehmen ist.

Die erfindungsgemäßen Polyester sind aufgebaut aus
— 3 bis 15 Mol% Einheiten, die sich von Hydrochinon ableiten,
— 15 bis 35 Mol% Einheiten, die sich von 2,7-Dihydroxynaphthalin ableiten,
— der Summe aus den Dihydroxyverbindungen äquivalenten molaren Mengen entsprechenden Einheiten, die sich von Terephthalsäure ableiten,
— sowie 10 bis 70 Mol% Einheiten, die sich von p-Hydroxybenzoesäure ableiten (für die Vertragsstaa-

2

ten BE, CH, LI) bzw. 10 bis 39,4 Mol% Einheiten (für die Vertragsstaaten DE, FR, GB, IT, NL).

Bevorzugte Polyester sind aufgebaut aus 5 bis 12 Mol% Einheiten, die sich von Hydrochinon ableiten, 20 bis 35 Mol%, insbesondere 25 bis 35 Mol% Einheiten, die sich von 2,7-Dihydroxynaphthalin ableiten, hierzu äquivalente Mengen an Einheiten, die sich von Terephthalsäure ableiten, sowie 30 bis 60 bzw. 39,4 Mol% Einheiten, die sich von p-Hydroxybenzoesäure ableiten.

Es versteht sich, daß sich die Anteile auf 100 Mol% ergänzen.

Vorteilhaft enthalten die aromatischen Polyester eine oder mehrere wiederkehrende Einheiten, die sich von 4,4'-Dihydroxydiphenyl, Bis-(4-hydroxyphenyl)-sulfon und/oder Bis-(4-hydroxyphenyl)-propan-2,2 ableiten, insbesondere in Mengen von 2 bis 20 Mol%, insbesondere 2 bis 17 Mol%. Es versteht sich, daß auf die Summe der Dihydroxyverbindungen jeweils die äquivalente Menge Terephthalsäure verwendet wird.

Bevorzugte vollaromatische, flüssigkristalline Polyester haben eine Glastemperatur von $\geqslant 120\,°C$. Die Glastemperatur soll dabei gemessen werden mit der DSC-Methode, wie sie beschrieben ist von K.H. Illers, u. a. in Makromol. Chem. 127 (1969), S. 1 ff. Bevorzugt sind auch flüssigkristalline Polyester, die bei einer Temperatur $< 290\,°C$ eine flüssigkristalline fadenbildende Schmelze bilden.

Die erfindungsgemäßen Copolyester lassen sich erhalten durch eine Reihe von Techniken, wie sie beispielsweise in der US-A 4 375 530 und der US-A 4 118 372 erwähnt sind. Insbesondere erhält man die erfindungsgemäßen Copolyester durch Polykondensation von Terephthalsäure und p-Acyloxybenzoesäure mit den entsprechenden Acylverbindungen der Dihydroxykomponenten der Polyester. Besonders eignen sich hierzu die Ester der Hydroxyverbindungen mit niederen Fettsäuren, z. B. deren Acetate bzw. Diacetate.

Es stellte sich als vorteilhaft heraus, die erfindungsgemäßen Polyester in einem Eintopfverfahren, ausgehend von den underivatisierten, käuflich erhältlichen Hydroxy- bzw. Carboxyverbindungen, unter Verwendung von Anhydriden niederer Fettsäuren, insbesondere Acetanhydrid, umzusetzen.

Dabei werden die trockenen Einsatzstoffe zusammen mit einem wenigstens 5 %igen molaren Überschuß von beispielsweise Acetanhydrid, bezogen auf die vorhandenen Hydroxygruppen, unter Inertgasatmosphäre und starkem Rühren auf eine Temperatur erwärmt, bei der ein deutlicher Rückfluß beobachtet wird. Die Badtemperatur wird dabei bis zu höchstens 5 Stunden, bevorzugt bis zu 2 Stunden, bei 130 bis 170 °C gehalten, dann wird sie langsam auf eine Temperatur von ca. 250 bis 350 °C gesteigert. Dabei werden überschüssiges Acetanhydrid und Essigsäure abdestilliert. Zur Entfernung der bei der Reaktion entstehenden Essigsäure kann gegen Ende der Kondensation der Druck reduziert werden, z. B. bis zu 0,5 mbar.

Bemerkenswert und nicht vorherzusehen bei der Anwendung dieses Eintopfverfahrens ist zunächst die problemlose und vollständige Reaktion ohne Katalysatorzusatz zu den gewünschten Polymeren in einer relativ kurzen Zeit. Dies ist umso erstaunlicher, als durch die Vielzahl chemisch unterschiedlicher Hydroxygruppen eine Abstufung der Reaktivitäten und damit ein mangelhafter polymerer Aufbau zu erwarten wäre.

Die so erhaltenen vollaromatischen, flüssigkristallinen Polyester können in festem Zustand, z. B. bei Temperaturen von 150 bis 250 °C weiterkondensiert werden bis zur gewünschten Viskosität. Dieser Prozeß kann sowohl vor als auch nach einer thermoplastischen Verarbeitung erfolgen.

Die erfindungsgemäßen vollaromatischen, flüssigkristallinen Polyester eignen sich zur Herstellung von Fäden, Folien, Schäumen und technischen Formteilen durch Spritzguß oder Extrusion.

Die Erfindung sei an folgenden Beispielen veranschaulicht.

## Beispiel 1

0,025 Mol Hydrochinon, 0,025 Mol 4,4'-Dihydroxydiphenyl, 0,05 Mol 2,7-Dihydroxynaphthalin, 0,125 Mol 4-Hydroxybenzoesäure, 0,1 Mol Terephthalsäure sowie 0,86 Mol Essigsäureanhydrid wurden unter einer Stickstoffatmosphäre 30 Minuten bei einer 130 °C gerührt, anschließend auf 150 °C erhitzt und die Temperatur innerhalb von 2,3 Stunden auf 290 °C gesteigert. Hierbei wurden 93 g Destillat erhalten.

Anschließend wurde bei 290 °C über einen Zeitraum von 55 Minuten der Druck auf 5 mbar reduziert und dann weiter 45 Minuten bei 290 °C gerührt. Man erhielt eine hochviskose fadenbildende Schmelze. Die Polymerschmelze und das erkaltete Polymere zeigten einen perlmuttartigen Glanz. Entsprechend differentialkalorimetrischer Bestimmung (DSC) hatte das Polymere eine Glasübergangstemperatur von 121 °C. Die inhärente Viskosität des Polymeren betrug 1,8 dl/g, gemessen in 0,1 gew.%iger Lösung in Pentafluorphenol bei 60 °C.

Nach Lagerung des Polymeren bei 200 °C für 14 Stunden und unter einem Druck von 20 mbar erhöhte sich die Viskosität auf 3,5 dl/g. Das Polymer zeigte unter dem Polarisationsmikroskop bei 290 °C zwischen gekreuzten Polarisatoren Texturen, wie sie für flüssigkristalline Polymere typisch sind.

## Vergleichsversuch (ohne 2,7-Dihydroxynaphthalin)

0,05 Mol Hydrochinon, 0,05 Mol 4,4'-Dihydroxydiphenyl, 0,125 Mol 4-Hydroxybenzoesäure, 0,1 Mol Terephthalsäure und 0,86 Mol Essigsäureanhydrid wurden nach dem in Beispiel 1 beschriebenen Verfahren kondensiert. Die erforderliche Endtemperatur betrug 300 °C. Die Polymerschmelze hatte bei 300 °C eine pastenartige Konsistenz und war nicht fadenbildend. Ferner hatte das Polymere eine braune, nichtglänzende Oberfläche und war spröde.

## Beispiel 2

0,025 Mol Hydrochinon, 0,05 Mol 2,7-Dihydroxynaphthalin, 0,025 Mol 4,4'-Dihydroxydiphenylsulfon, 0,1 Mol Terephthalsäure, 0,125 Mol 4-Hydroxybenzoesäure und 0,35 Mol Essigsäureanhydrid würden, wie in Beispiel 1 beschrieben, kondensiert. Die Endtemperatur betrug 280 °C. Es wurde ein hochviskoses, fadenbildendes Polymeres erhalten. Das erkaltete Polymere hatte permuttartigen Oberflächenglanz und zeigte hohe Steifigkeit und Zähigkeit. Entsprechend differentialkalorimetrischer Bestimmung hatte es eine Glastemperatur von 127 °C sowie eine inhärente Viskosität von 1,7 dl/g.

## Vergleichsbeispiel

0,025 Mol Hydrochinon, 0,05 Mol 1,5-Dihydroxynaphthalin, 0,025 Mol 4,4'-Dihydroxydiphenylsulfon, 0,1 Mol Terephthalsäure, 0,125 Mol 4-Hydroxybenzoesäure und 0,35 Mol Essigsäureanhydrid wurden, wie in Beispiel 1 beschrieben, kondensiert. Die erhaltene Polymerschmelze hatte eine pastenartige Konsistenz und war nicht fadenbildend. Das erkaltete Polymere hatte eine grünbraune Farbe, eine nichtglänzende Oberfläche und war spröde. Die inhärente Viskosität betrug 1,0 dl/g.

## Beispiel 3

0,015 Mol Hydrochinon, 0,085 Mol 2,7-Dihydroxynaphthalin, 0,1 Mol Terephthalsäure, 0,13 Mol 4-Hydroxybenzoesäure und 0,45 Mol Essigsäureanhydrid wurden, wie in Beispiel 1 beschrieben, bis zu einer Endtemperatur von 300 °C kondensiert. Es entstand ein fadenbildendes, hochviskoses Polymeres. Das erhaltene Polymere hatte einen perlmuttartigen Glanz und glatte Oberfläche sowie eine hohe Steifigkeit und hohe Zähigkeit. Die inhärente Viskosität betrug 0,8 dl/g. Die Glastemperatur betrug 138 °C.

## Beispiel 4

0,015 Mol Hydrochinon, 0,05 Mol 2,7-Dihydroxynaphthalin, 0,035 Mol 4,4'-Dihydroxydiphenylsulfon, 0,1 Mol Terephthalsäure, 0,13 Mol 4-Hydroxybenzoesäure und 0,45 Mol Essigsäureanhydrid wurden, wie in Beispiel 1 beschrieben, bis zu einer Endtemperatur von 300 °C kondensiert. Man erhielt ein hochviskoses, fadenbildendes Polymeres. Die inhärente Viskosität betrug 0,9 dl/g. Das Polymere zeichnete sich durch hohe Steifigkeit sowie perlmuttartigen Glanz und eine glatte Oberfläche aus. Die Glastemperatur betrug 142 °C.

**Patentansprüche** (für die Vertragsstaaten : DE, FR, GB, IT, NL)

1. Vollaromatische Polyester, die unterhalb von 300 °C eine flüssigkristalline, fadenbildende Schmelze bilden, aufgebaut aus
   a) 3 bis 15 Mol% Einheiten, die sich von Hydrochinon ableiten,
   b) 5 bis 35 Mol% Einheiten, die sich von 2,7-Dihydroxynaphthalin ableiten,
   c) der Summe aus a) und b) äquivalente molare Menge an Einheiten, die sich von Terephthalsäure ableiten, und
   d) 10 bis 39,4 Mol% Einheiten, die sich von p-Hydroxybenzoesäure ableiten.

2. Vollaromatische Polyester nach Anspruch 1, dadurch gekennzeichnet, daß ein Teil der wiederkehrenden Einheiten a) und/oder b) ersetzt ist durch eine oder mehrere wiederkehrende Einheiten, die sich von
   e) 4,4'-Dihydroxydiphenyl, und/oder
   f) Bis-(4-hydroxyphenyl)-sulfon, und/oder
   g) Bis-(4-hydroxyphenyl)-propan-2,2 ableiten.

3. Vollaromatische Polyester nach den Anspruch 2, dadurch gekennzeichnet, daß sie eine oder mehrere der wiederkehrenden Einheiten e), f) und/oder g) in einer Menge von 2 bis 20 Mol% enthalten.

4. Vollaromatische Polyester nach den Ansprüchen 2 bis 3, dadurch gekennzeichnet, daß sie die wiederkehrende Einheit b) sowie eine oder mehrere wiederkehrende Einheiten e), f) und/oder g) in einer Menge von insgesamt 25 bis 40 Mol% enthalten.

5. Vollaromatische Polyester nach den Ansprüchen 1 bis 4, dadurch gekennzeichnet, daß der molare Anteil an Einheiten, die sich von 2,7-Dihydroxynaphthalin ableiten, 25 bis 35 Mol% beträgt.

6. Verfahren zur Herstellung vollaromatischer Polyester nach einem der Ansprüche 1 bis 5, dadurch gekennzeichnet, daß man die Monomeren in Form der underivatisierten Hydroxy- bzw. Carboxyverbindungen in den beschriebenen molaren Verhältnissen unter Zusatz von überschüssigem Fettsäureanhydrid in einem Eintopfverfahren zu Polyestern umsetzt.

**Patentansprüche** (für die Vertragsstaaten : BE, CH, LI)

1. Vollaromatische Polyester, die unterhalb von 300 °C eine flüssigkristalline, fadenbildende Schmelze bilden, aufgebaut aus
   a) 3 bis 15 Mol% Einheiten, die sich von Hydrochinon ableiten,
   b) 5 bis 35 Mol% Einheiten, die sich von 2,7-Dihydroxynaphthalin ableiten,
   c) der Summe aus a) und b) äquivalente molare Menge an Einheiten, die sich von Terephthalsäure ableiten, und
   d) 10 bis 70 Mol% Einheiten, die sich von p-Hydroxybenzoesäure ableiten.
2. Vollaromatische Polyester nach Anspruch 1, dadurch gekennzeichnet, daß ein Teil der wiederkehrenden Einheiten a) und/oder b) ersetzt ist durch eine oder mehrere wiederkehrende Einheiten, die sich von
   e) 4,4'-Dihydroxydiphenyl, und/oder
   f) Bis-(4-hydroxyphenyl)-sulfon, und/oder
   g) Bis-(4-hydroxyphenyl)-propan-2,2 ableiten.
3. Vollaromatische Polyester nach den Anspruch 2, dadurch gekennzeichnet, daß sie eine oder mehrere der wiederkehrenden Einheiten e), f) und/oder g) in einer Menge von 2 bis 20 Mol% enthalten.
4. Vollaromatische Polyester nach den Ansprüchen 2 bis 3, dadurch gekennzeichnet, daß sie die wiederkehrende Einheit b) sowie eine oder mehrere wiederkehrende Einheiten e), f) und/oder g) in einer Menge von insgesamt 25 bis 40 Mol% enthalten.
5. Vollaromatische Polyester nach den Ansprüchen 1 bis 4, dadurch gekennzeichnet, daß der molare Anteil an Einheiten, die sich von 2,7-Dihydroxynaphthalin ableiten, 25 bis 35 Mol% beträgt.
6. Verfahren zur Herstellung vollaromatischer Polyester nach einem der Ansprüche 1 bis 5, dadurch gekennzeichnet, daß man die Monomeren in Form der underivatisierten Hydroxy- bzw. Carboxyverbindungen in den beschriebenen molaren Verhältnissen unter Zusatz von überschüssigem Fettsäureanhydrid in einem Eintopfverfahren zu Polyestern umsetzt.

**Claims** (for the Contracting States : DE, FR, GB, IT, NL)

1. A completely aromatic polyester which forms a liquid-crystalline filament-forming melt at below 300 °C and consists of
   a) from 3 to 15 mol% of units derived from hydroquinone,
   b) from 5 to 35 mol% of units derived from 2,7-dihydroxynaphthalene,
   c) molar amounts, equivalent to the sum of a) and b), of units derived from terephthalic acid, and
   d) from 10 to 39.4 mol% of units derived from p-hydroxybenzoic acid.
2. A completely aromatic polyester as claimed in claim 1, wherein some of the repeating units a) und/or b) are replaced by one or more repeating units derived from
   e) 4,4'-dihydroxydiphenyl and/or
   f) bis-(4-hydroxyphenyl) sulfone and/or
   g) 2,2-bis-(4-hydroxyphenyl)-propane.
3. A completely aromatic polyester as claimed in claim 2, which contains one or more of the repeating units e), f) and/or g) in an amount of from 2 to 20 mol%.
4. A completely aromatic polyester as claimed in claims 2 and 3, which contains the repeating unit b) and one or more repeating units e), f) and/or g) in a total amount of from 25 to 40 mol%.
5. A completely aromatic polyester as claimed in claims 1 to 4, wherein the amount of units derived from 2,7-dihydroxynaphthalene is from 25 to 35 mol%.
6. A process for the preparation of a completely aromatic polyester as claimed in any of claims 1 to 5, wherein the monomers, in the form of underivatized hydroxy or carboxy compounds in the molar ratios described, are converted to the polyester in a single-vessel process, with the addition of excess fatty acid anhydride.

**Claims** (for the Contracting States : BE, CH, LI)

1. A completely aromatic polyester which forms a liquid-crystalline filament-forming melt at below 300 °C and consists of
   a) from 3 to 15 mol% of units derived from hydroquinone,
   b) from 5 to 35 mol% of units derived from 2,7-dihydroxynaphthalene,
   c) molar amounts, equivalent to the sum of a) and b), of units derived from terephthalic acid, and
   d) from 10 to 70 mol% of units derived from p-hydroxybenzoic acid.
2. A completely aromatic polyester as claimed in claim 1, wherein some of the repeating units a) und/or b) are replaced by one or more repeating units derived from

**0 139 303**

e) 4,4'-dihydroxydiphenyl and/or

f) bis-(4-hydroxyphenyl) sulfone and/or

g) 2,2-bis-(4-hydroxyphenyl)-propane.

3. A completely aromatic polyester as claimed in claim 2, which contains one or more of the repeating units e), f) and/or g) in an amount of from 2 to 20 mol%.

4. A completely aromatic polyester as claimed in claims 2 and 3, which contains the repeating unit b) and one or more repeating units e), f) and/or g) in a total amount of from 25 to 40 mol%.

5. A completely aromatic polyester as claimed in claims 1 to 4, wherein the amount of units derived from 2,7-dihydroxynaphthalene is from 25 to 35 mol%.

6. A process for the preparation of a completely aromatic polyester as claimed in any of claims 1 to 5, wherein the monomers, in the form of underivatized hydroxy or carboxy compounds in the molar ratios described, are converted to the polyester in a single-vessel process, with the addition of excess fatty acid anhydride.

**Revendications (pour les Etats contractants : DE, FR, GB, IT, NL)**

1. Polyesters entièrement aromatiques, formant à une température inférieure à 300 °C une masse fondue liquide-cristalline, formant des fils, constituée de

a) 3 à 15 % molaires d'unités dérivées de l'hydroquinone,

b) 5 à 35 % molaires d'unités dérivées du dihydroxy-2,7 naphtalène,

c) une proportion molaire équivalente à la somme de a) + b) d'unités dérivées de l'acide téréphtalique et

d) 10 à 39,4 % molaires d'unités dérivées de l'acide para-hydroxy-benzoïque.

2. Polyesters entièrement aromatiques suivant la revendication 1, caractérisés en ce qu'une partie des unités récurrentes a) et (ou) b) est remplacée par une ou plusieurs unités récurrentes dérivées

e) du dihydroxy-4,4' diphényle et (ou)

f) de la bis-(hydroxy-4 phényl)-sulfone et (ou)

g) du bis-(hydroxy-4 phényl)-propane-2,2.

3. Polyesters entièrement aromatiques suivant la revendication 2, caractérisés en ce qu'ils contiennent une ou plusieurs unités récurrentes e), f) et (ou) g) en une proportion comprise entre 2 et 20 % molaires.

4. Polyesters entièrement aromatiques suivant les revendications 2 et 3, caractérisés en ce que la proportion globale de l'unité récurrente b) et d'une ou de plusieurs unités récurrentes e), f) et (ou) g) est comprise entre 25 et 40 % molaires.

5. Polyesters entièrement aromatiques suivant les revendications 1 à 4, caractérisés en ce que la proportion molaire des unités dérivées du dihydroxy-2,7 naphtalène est comprise entre 25 et 35 % molaires.

6. Procédé de préparation de polyesters entièrement aromatiques suivant l'une des revendications 1 à 5, caractérisé en ce que l'on transforme les monomères sous forme des composés hydroxy ou carboxy non substitués, dans les proportions molaires indiquées, dans un procédé à un seul réacteur et avec addition d'un excès d'un anhydride d'acide gras, en polyesters.

**Revendications (pour les Etats contractants : BE, CH, LI)**

1. Polyesters entièrement aromatiques, formant à une température inférieure à 300 °C une masse fondue liquide-cristalline, formant des fils, constituée de

a) 3 à 15 % molaires d'unités dérivées de l'hydroquinone,

b) 5 à 35 % molaires d'unités dérivées du dihydroxy-2,7 naphtalène,

c) une proportion molaire équivalente à la somme de a) + b) d'unités dérivées de l'acide téréphtalique et

d) 10 à 70 % molaires d'unités dérivées de l'acide para-hydroxy-benzoïque.

2. Polyesters entièrement aromatiques suivant la revendication 1, caractérisés en ce qu'une partie des unités récurrentes a) et (ou) b) est remplacée par une ou plusieurs unités récurrentes dérivées

e) du dihydroxy-4,4' diphényle et (ou)

f) de la bis-(hydroxy-4 phényl)-sulfone et (ou)

g) du bis-(hydroxy-4 phényl)-propane-2,2.

3. Polyesters entièrement aromatiques suivant la revendication 2, caractérisés en ce qu'ils contiennent une ou plusieurs unités récurrentes e), f) et (ou) g) en une proportion comprise entre 2 et 20 % molaires.

4. Polyesters entièrement aromatiques suivant les revendications 2 et 3, caractérisés en ce que la proportion globale de l'unité récurrente b) et d'une ou de plusieurs unités récurrentes e), f) et (ou) g) est comprise entre 25 et 40 % molaires.

5. Polyesters entièrement aromatiques suivant les revendications 1 à 4, caractérisés en ce que la proportion molaire des unités dérivées du dihydroxy-2,7 naphtalène est comprise entre 25 et 35 % molaires.

6. Procédé de préparation de polyesters entièrement aromatiques suivant l'une des revendications 1 à 5, caractérisé en ce que l'on transforme les monomères sous forme des composés hydroxy ou carboxy non substitués, dans les proportions molaires indiquées, dans un procédé à un seul réacteur et avec addition d'un excès d'un anhydride d'acide gras, en polyesters.